# EUROPEAN PATENT APPLICATION

(11) **EP 1 569 405 A1**
(43) Date of publication of application: **31.08.2005**
(21) Application number: 04004552.8
(22) Date of filing: 27.02.2004
(51) Int. Cl.: H04L 29/06, G06F 17/60

(54) **Technique for creation and linking of communications network user accounts**

(71) Applicant: TELEFONAKTIEBOLAGET LM ERICSSON (publ), 164 83 Stockholm (SE)
(72) Inventor: Holtmanns, Silke, 52499 Baesweiler (DE); Schuba, Marko, 52457 Aldenhoven (DE)
(74) Representative: Röthinger, Rainer

(57) **Abstract**

A technique for linking an account at a service provider with a master account previously generated by an identity provider is disclosed. The technique includes the steps of receiving, by the identity provider, a request for access, whereby the identity provider determines which data is required to generate a new account by the service provider. Next, the identity provider acquires data required to generate the new account and sends such data to the service provider. Thereafter, the identity provider associates the master account with the new account generated by the service provider.

## Description

### Field of the Invention

The invention relates to computer network-based communications. More specifically, the invention relates to a technique for creating and linking various user accounts accessible via a communications network.

### Background of the Invention

With the advent of the Internet and other computer networks and the increasing number of associated computer-based transactions, computer users find themselves with a growing number of accounts distributed at a variety of service providers. These service providers can range from an online florist or bookseller, to a bank or other financial institution. In order to access one of these service providers, a user must at a minimum provide the service provider with login information associated with an account such as a username and password. Often, users tend to use the same or similar usernames and passwords for various service providers. However, this practice can be problematic if one of the service providers has a security breach. In the alternative, a user may create a unique username and password for each service provider requiring that the user maintain an accurate record for each of the service providers, a task which can be cumbersome and also fraught with security issues.

Furthermore, if a user has not previously established an account with the service provider, registration information in addition to a username and password will likely be required when opening an account. This information may include data pertaining to preferred shipping address, billing address, telephone numbers, credit card information, medical history, and the like. Depending on the nature of the transaction and the used access device, the requirement for such information may discourage a user from establishing an account and completing the contemplated transactions.

One technique for federating multiple service provider user accounts has been proposed by The Liberty Alliance Project (see www.projectliberty.org), an industry standardization collective. The Liberty Alliance Project proposes an arrangement where one or more service provider accounts may be federated or consolidated in a master account at an identity provider. Once the accounts have been federated, a user must only remember the username and password for the master account to access each service provider account associated with the master account. This arrangement is referred to as a Single Sign On as the user is authenticated to the service provider after login into the master account.

While the Liberty Alliance Project Single Sign On technique provides an enhanced user experience as compared to a user logging into each service provider, conventional procedures for setting up or initializing each service provider account within the master account are complicated. A user must manually enter in the information required for the seamless transfers between the identity provider and each service provider. As there are many variables technical in nature (e.g., name, address, authentication information like user name and password, etc.) that need to be taken into account when associating a (newly generated) service provider account with a master account, widespread adoption of identity provider-based master accounts will not occur until a more user-friendly interface is provided.

Accordingly, it will be appreciated that there remains a need for an improved technique for creating and linking various service provider accounts with a master account that may be used to access each of the linked service provider accounts.

### Summary of the Invention

The invention is provided in a method for linking an account newly generated at a service provider with a master account previously generated by an identity provider. Such a method includes the steps of receiving, by the identity provider, a request for access, and determining, by the identity provider, which data is required to generate a new account by the service provider. Once it is determined what data is required, the necessary data is acquired by the identity provider, whereby the identity provider sends the data required to generate the new account to the service provider. Thereafter, the identity provider associates (or federates) the master account with the new account generated by the service provider.

Once this association has been accomplished, a user may first access the master account to seamlessly access the new account at the service provider. For example, the master account may provide the necessary account data (e.g., including information that has a meaning only in the context between a specific identity provider and a specific service provider, such as an opaque handle) to the service provider to access the new account.

In some variations, the method also includes the initial steps (i.e., they occur prior to the step of receiving a request by the identity provider for access) of receiving, by the service provider, a request to access the service provider, enabling, by the service provider, the selection of the identity provider, and sending, by the service provider, a request to access the identity provider. This arrangement of steps may be used when the service provider is first accessed (e.g., via a user terminal) and it is desired to generate a new account at such service provider that is to be associated with a master account at the identity provider.

In some variations, the method also includes the step of enabling, by the identity provider, the selection of the service provider to generate a new account. This selection may be enabled by a pre-association between the identity provider and the service provider (which may include a circle of trust or other grouping of account providers that use compatible account related architecture). For example, the identity provider may provide an interface that lists or otherwise identifies one or more service providers including the service provider that generates the new account. From this list, the service provider can be selected.

The service provider or a further network component may provide the data required to access an account and other protocol requirements for associating the accounts so that the master account may be used for a seamless access to the service provider account. Such data required to access an account may include a username, a password, and the like.

The method may also include the step of polling, by the identity provider, the service provider or another network component to determine what data is required to generate the new account. The determination of what data is required to generate the new account may, in some variants, be facilitated by the step of sending, by the service provider or another network component to the identity provider, a list of required data needed to generate the new account. However, if there is a service provider within a circle of trust or which has some other predefined relationship with the identity provider, such polling may not be necessary as the requirements for each service provider account might have already been provided to the identity provider. This might be the case, for example, if the specific identity provider and the specific service provider have already generated and federated other accounts in the past. In such a situation, the particular requirements of a specific service provider may already be known to the identity provider.

In addition, the method may include the step of generating, by the service provider, the new account. Once the new account has been generated, the method may also incorporate the step of receiving, by the identity provider, account information (e.g., opaque handle, password, or other identification data) required to associate the master account with the new account. Such data may be used to populate a database (or table within a database) that is accessible by the identity provider with data associated with the master account.

The method may also include the steps of polling, by the identity provider a discovery service, where data required to generate the new account may be accessed, and receiving, by the identity provider from the discovery service, the location of where data required to generate the new account may be accessed. For example, in some variations, the data required to generate the new account is stored at a data provider, such as a web service provider, accessible via a communications network. The discovery service may be any module that is useful for identifying the location of data required, for example, for account generation or account linking. It may be implemented using a Liberty Alliance Project service for locating attribute providers.

If the service provider does not receive data sufficient to create a new account, the missing required data may be obtained through an input interface, that permits, for example, a user input of the missing data. This interface may be compatible with the specifications of the Liberty Alliance Project or it may comprise any one of a plurality of conventional techniques for acquiring user data. In contrast, if the service provider obtains more data than is needed to generate the account, a temporary dummy account may be generated that contains additional information and that may subsequently be deleted.

The method may further comprise the step of sending, from at least one of the identity provider and the service provider at which a new account has been or is to be generated, information to a user terminal from which account creation has been requested. Such information may include data about the new account (such as a username, a password, etc.). Additionally, or alternatively, information relating to the association of the new account with an existing account may be sent.

The invention may also be embodied in a computer program product (which may optionally be stored on a computer readable recording medium) comprising program code portions for performing the steps of any of the preceding methods when the computer program product is run on a computer system.

In another embodiment, the invention is provided in the form of one or more network components comprising a computer processor and a memory coupled to the processor, where the memory is encoded with one or more programs that may perform all or a portion of the method steps previously described.

In yet another embodiment, the invention is covered by a network component for linking an account at a service provider component with a master account previously generated by the network component. The network component includes a first interface for receiving a request for access, a first processor for determining which data is required to generate a new account by the service provider component, and a first database for storing data associated with the master account and data associated with the new account at the service provider component. With this configuration, the first interface acquires data required to generate the new account and sends such data required to the service provider component, and the first processor associates the master account with the new account generated by the service provider component. This association may be performed in the first database (e.g. by populating the first database with required data such as a username associated with the new account and a particular code such as an opaque handle).

The invention may also include a system comprising the network component described above and a service provider component. With this system, the service provider component includes a second interface for receiving a request to access the service provider component, and a second database for storing data associated with the new account and the network component. The second interface enables the selection of the network component and sends a request to access the network component.

In one example useful for understanding and implementing the invention, a method commences with a user login into a master account at an identity provider. The user then chooses a service provider from a circle of trust associated with the identity service provider to request federation between the master account and an account at the service provider (and the user may or may not have a pre-existing account at such service provider). Next, the user is redirected to the chosen service provider and the federation request is sent to the service provider. The user then logs into his or her account or a new account is created at the service provider. The user is then redirected to the identity provider and the response to the federation request is sent to the identity provider so that, thereinafter, the service provider account can be federated with the master account.

In another example, a method begins with a user login into an account at a service provider. At the service provider, the user selects an identity provider to request federation between the service provider account and the selected identity provider. The user is then redirected to the chosen identity provider and the federation request is sent to the identity provider. The user then logs into his or her identity provider master account or a new master account is generated. The user is subsequently redirected to the service provider. With the redirection, the federation response can be sent from the identity provider to the service provider. After this has been completed, the user may seamlessly access the service provider account from the identity provider master account.

In still another example, the invention is provided in a method for associating one or more service provider accounts with a master account generated by an identity provider via a communications network. With this method, the identity provider is accessed in order to open a new account with the service provider, where the identity provider is first accessed and a service provider is selected by the identity provider (from, for example, a list of service providers associated or otherwise linked with the identity provider). The method includes the steps of enabling, by the identity provider, the selection of a service provider for which a new service provider account is to be generated to associate with the master account, determining, by the identity provider, which data is required by the service provider to generate a new service provider account, acquiring, by the identity provider from, for example, a web service provider and/or a user terminal the data required to generate the new service provider account, sending, by the identity provider, the acquired data to the service provider, generating, by the service provider, the new service provider account, and obtaining, by the identity provider, information for accessing the new service provider account. As a further step, the account newly generated may be associated with the existing account.

In still another example, the invention is also covered by a method for associating one or more service provider accounts with a master account generated by an identity provider via a communications network. However, with this method, a service provider is accessed where a service provider account is to be newly created (e.g., because it does not currently exist for the user), and the identity provider is selected by the service provider (such as, for example, through a list of identity providers associated with or otherwise connected to the service providers), and the identity provider provides the service provider with the requisite information to establish a service provider account. This method comprises the steps of selecting, by a service provider, the identity provider where the master account (that is to be associated with a service provider account) was previously generated, requesting, by the service provider from the identity provider, data required to generate a new service provider account associated with the master account, obtaining, by the identity provider, login information to access the master account, acquiring, by the identity provider from a web service provider, the data required to generate the new service provider account, sending, by the identity provider, the acquired data to the service provider, generating, by the service provider, the new service provider account, and obtaining, by the identity provider, information for accessing the new service provider account. As a further step, the account newly generated may be associated with the existing account.

The invention is also exemplified in a method for associating one or more user service provider accounts with a master account generated by an identity provider via a communications network. With this arrangement, a service provider is accessed having a previously generated service provider account, and the service provider selects an identity provider to generate a master account that will be associated with the previously generated service provider account. This method comprises the steps of selecting, by a service provider, an identity provider to generate a master account to associate with the service provider account, polling, by the service provider, the selected identity provider to determine which data is required by the identity provider to generate the master account, sending, by the service provider, the required data to the identity provider to generate the new master account, and generating, by the identity provider, a new master account that will be associated with the service provider account.

### Brief Description of the Drawings

In the following the invention will be described with reference to exemplary embodiments illustrated in the figures, in which:
- Fig. 1: is a schematic diagram useful for understanding and implementing the invention.
- Fig. 2: is a process flow diagram useful for understanding and implementing the invention;
- Fig. 3: is a process flow diagram useful for understanding and implementing the invention;
- Fig. 4: is a process flow diagram useful for understanding and implementing the invention;
- Fig. 5: is a process flow diagram useful for understanding and implementing the invention;
- Fig. 6: is a process flow diagram useful for understanding and implementing the invention;
- Fig. 7: is a process flow diagram illustrating a first embodiment of the invention; and
- Fig. 8: is a schematic diagram illustrating a second embodiment of the invention.

### Detailed Description of the Preferred Embodiments

In the following description, for purposes of explanation and not limitation, specific details are set forth, such as particular sequences of steps and various configurations, etc. in order to provide a thorough understanding of the present invention. It will be apparent to one skilled in the art that the present invention may be practiced in other embodiments that depart from these specific details. Moreover, those skilled in the art will appreciate that the functions explained herein below may be implemented using software functioning in conjunction with a programmed microprocessor or general purpose computer, and/or using an application specific integrated circuit (ASIC). It will also be appreciated that while the current invention is primarily described as a method, it may also be embodied in a computer program product as well as a system comprising a computer processor and a memory coupled to the processor, where the memory is encoded with one or more programs that may perform the methods disclosed herein.

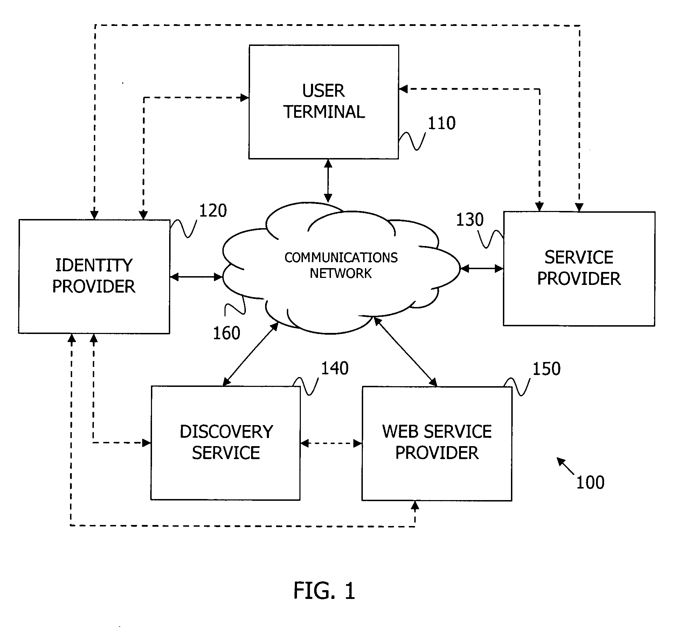

With reference to Fig. 1, the invention may be implemented in connection with a master account at an identity provider 120 and one or more service provider accounts which may be associated with one or more service providers 130, where both the identity provider and the service providers are accessible via a communications network 160 such as the Internet (or the various components may be directly coupled as illustrated in Fig. 1). Other components that may be included depending on the implementation are a user terminal 110, a discovery service 140 and a web service provider 150. The service providers are entities that provide services and/or goods. The identity provider creates, maintains, and manages identity information for a plurality of users in one or more master accounts for each user and provides authentication to service providers.

Advantageously, once the techniques of the invention have been implemented as described herein, the master account permits to access (without the necessity of entering identification data) each of the service provider accounts associated therewith. For example, if users have associated their online banking accounts, their credit card accounts, their online shopping accounts, etc. with their master account, then in order to access each of these service provider accounts, the user only needs to log in via the user terminal 110 to the identity provider master account (rather than log in into each account separately) at the identity provider 120. Accordingly, after the account creation and linking mechanisms according to the present invention have successfully been completed, conventional single-sign on techniques according to the Liberty Alliance Project can be performed.

Some variations of the invention also include a web service provider 150 which maintains attribute data associated with a user for delivery to an identity provider 150 should information be needed to generate a new account (whether a master account or a service provider account to be associated with a new master account) as described below. The web service provider (as well as other storage modules), may store the account data in a profile format such as that adopted by the Liberty Alliance Project, or it may use a format such as Electronic Commerce Modeling Language (ECML). A discovery service 140 may be used by an identity provider 120 to determine the location of data needed to establish a new account. Further details regarding the various components 100, their interrelation, and their uses will now be described.

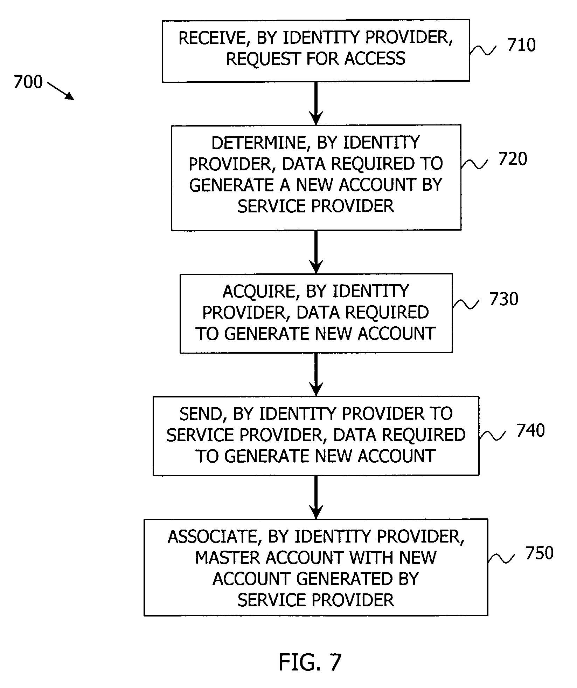

A first embodiment of the invention 700 is provided in Fig. 7. The method 700 illustrated therein may be implemented in connection with an identity provider where a master account has previously been generated and a new account is to be generated at a service provider. The method commences, at step 710, with the identity provider receiving a request for access (which may only be a request to access the identity provider as a whole, or it may be a request to access a master account associated with the identity provider). The identity provider, at step 720, determines which data is required to generate a new account by the service provider. At step 730, the identity provider acquires the data needed to generate the new account, and sends, at step 740, such data to the service provider so that it may generate the new account. The identity provider then, at step 750, associates the master account with the new account generated by the service provider.

The new account, when generated by the service provider, may include the minimum amount of data needed to establish the new account, or depending on what data is obtained by the service provider, the new account may initially be a "dummy account" that contains information other or greater than that required, and that after the new account is federated or otherwise associated with the master account, the additional data (i.e., data not required in connection with the new account) is deleted. This variation may be implemented if certain design restrictions dictate that the service provider receive more information than is required, such as when the requirements of the selected service provider are outdated or otherwise not known.

Fig. 8 illustrates a second embodiment of the invention comprising a system 800 for associating a master account of a user generated by an identity provider module 810 with an account of the user generated by a service provider module 820 via a communications network 830. The system 800 includes an identity provider module 810 having a first interface 840, a first database 860, and a first processor 880, and a service provider module 820 having a second interface 850, a second database 870, and a second processor 890. The identity provider module 810 may communicate via the first interface 840 over the communications network 830 to the second interface 850 of the second provider module 820. The first database 860 is populated with data regarding the master account and any service provider accounts associated therewith, and the second database 870 is populated with data regarding one or more service provider module accounts. The first and second processors 880, 890 control the operations of the respective modules.

The invention may also solely comprise the identity provider module (also referred to as a network component). With this arrangement, the first interface 840 receives requests for access. The first processor 880 determines which data is required to generate a new account by the service provider module. The first database 860 stores data associated with the master account and data associated with an account at the service provider module 820. The first interface 840 acquires data required to generate the new account and sends the required data to generate the new account to the service provider module 820. After the service provider module 820 generates a new account, the first interface 840 receives data from the service provider module 820 and thereafter, the first processor 880 associates the master account with the new account.

In the system embodiment, the second interface 850 of the service provider module 820 receives requests to access the service provider so that the service provide module 820 may be accessed prior to accessing the identity provider module 840 and prior to the generation of the new account. If the service provider module is first accessed 820, it may also provide an interface or other mechanism to associate it with the identity provider.

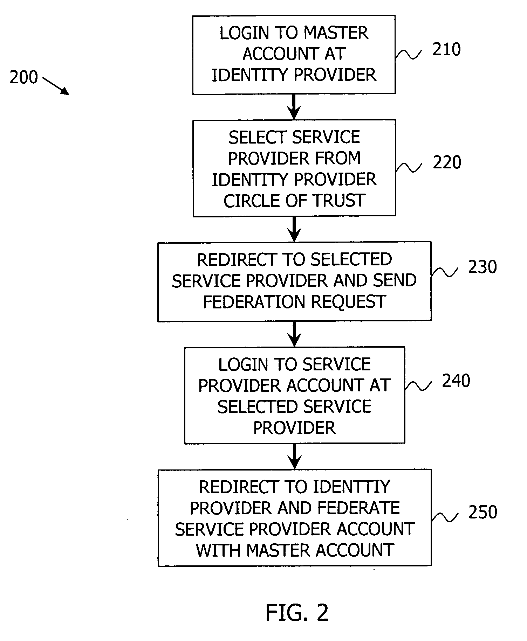

With reference to Fig. 2, a further embodiment 200 useful for understanding and implementing the invention is illustrated where a user has a pre-existing service provider account that he or she would like to associate with a pre-existing master account. The example commences, at step 210, with log in into the master account at an identity provider. Once the master account is accessed, a service provider is selected, at step 220, from an identity provider circle of trust. The circle of trust may be a group of identity provider and service providers that have pre-existing business relationships in place that allow the seamless transfer from a master account to an associated service provider account. However, it will also be appreciated that the master account may be linked to one or more service provider accounts that are not within a circle of trust or other pre-existing arrangement with the identity provider (and that additional information may be required to establish a new link between an identity provider and a service provider). Once the service provider has been selected, a user, at step 230, is redirected to the selected service provider (without the need for the user to separately or independently access the service provider) and a federation request is sent to the service provider. The user then, at step 230, logs into the service provider account at the selected service provider. Finally, at step 250, the user is redirected to the identity provider and information necessary for accessing the service provider account is sent to the identity provider. Thereafter, the newly generated provider account is federated (or associated with) the master account, so that, in the future, the master account may be used to access the service provider account.

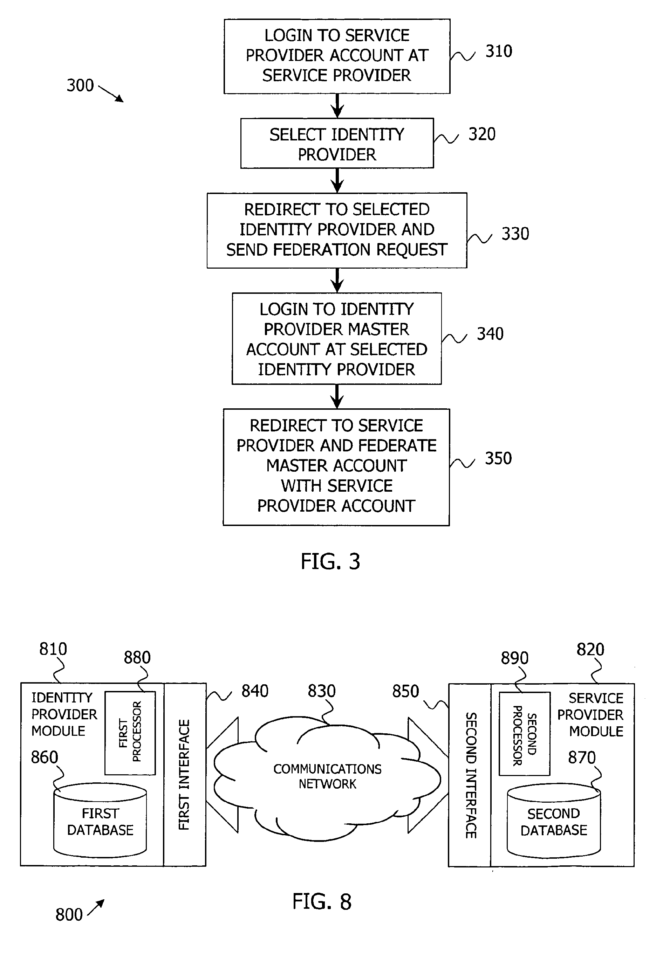

Fig. 3 illustrates a still further embodiment 300 useful for understanding and implementing the invention where the user also has an account at a service provider that he or she would like to associate with a master account. The example begins, at step 310, with the user login into a service provider account at a service provider. Once the account information has been confirmed, the user may select, at step 320, an identity provider where the user has a master account to associate with the service provider account. After the identity provider is selected, the user is redirected to the selected identity provider and an accompanying federation request is sent, at step 330, so that the user may provide the identity provider with the required information to log in to the master account at step 340. Provided that the master account login information is confirmed, the user is then redirected to the service provider, at step 350, and the service provider account is thereinafter associated (or federated) with the master account.

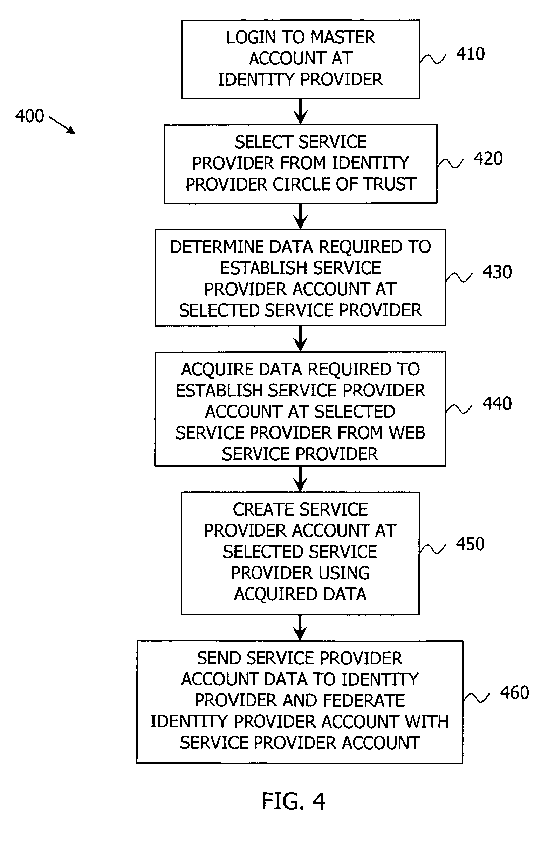

Referring to Fig. 4, a flow diagram illustrating another embodiment 400 for implementing the invention is provided. With this example, the user has a pre-existing master account with an identity provider and desires to establish a new service provider account (that will be associated with the master account). At step 410, the user provides the requisite information to login into his or her master account at the identity provider. The user may then, at step 420, select a service provider which may or may not be within a circle of trust where a service provider account will be generated to associate with the master account.

Once the service provider has been selected, at step 430, it is determined which data is required by the service provider to establish the new service provider account. This determination may be made based on requirement information that has previously been identified (e.g., when the circle of trust was established between the identity provider and the specified service provider), or the identity provider may query the service provider requesting the account requirements, with the service provider or other network component subsequently sending the requirements to the identity provider.

The identity provider, at step 440, receives the data required to establish the service provider account from a web service provider (or in the alternative, from the identity provider) that stores information regarding the network identity of the user (those attributes which are used to identify the user and which are typically required from service providers to establish new accounts) and sends the required data to the service provider. If the web service provider does not have all of the data necessary to generate the service provider account, but the identity provider has stored the required missing data, then the identity provider may either send the required data to the web service provider, or may send it directly to the service provider.

In some variations, the method also includes the step of initiating a DiscoveryLookup Request for user data from a Discovery Service (such as those utilized in connection with attribute sharing as provided by the Liberty Alliance Project) for finding the locations of resources such as identity data or services acting for the benefit of an identity (e.g., user profile or a digital wallet) that may be useful in generating new service provider, and in some cases, master accounts. In response to the DiscoveryLookup Request, the Discovery Service might send a Service Assertion and Service Description to the identity provider which describes or otherwise identifies where data or other identity information that is needed to generate the service provider account. Alternatively, the method may employ an Interaction Service which prompts the user of the method for additional information required for establishing the new account or for permission to access the information (e.g., from a location such as an Electronic Commerce Modelling Language "ECML" wallet associated with a mobile phone Subscriber Identity Module "SIM").

At step 450, a new service provider account is generated using the data acquired or received by the service provider from the web service provider. The information regarding the new service provider account (e.g., opaque handle) is next sent, at step 460, to the identity provider, and the master account and the newly generated service provider account are then federated.

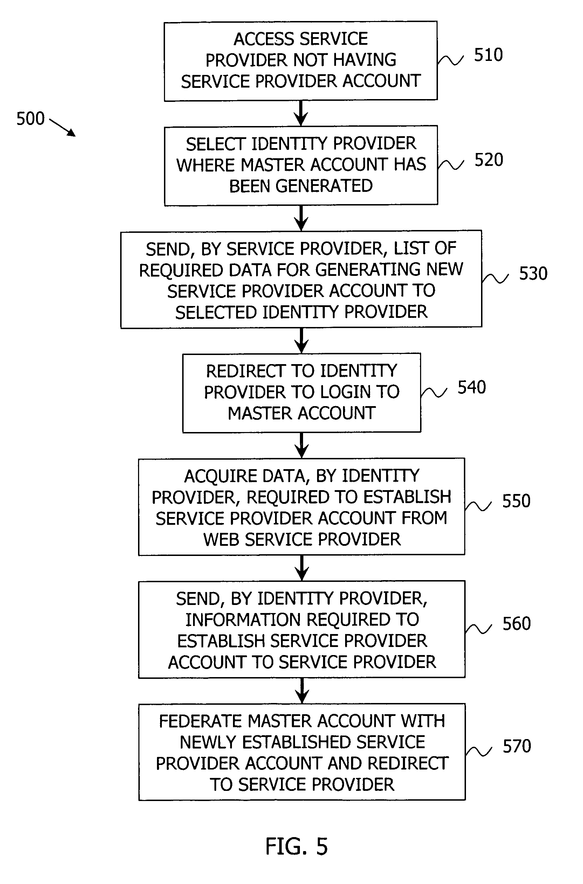

With reference to Fig. 5, a further embodiment 500 for implementing the invention is illustrated where a user has a pre-existing master account with an identity provider. The example commences at step 510, with a service provider being accessed where the user does not have a corresponding service provider account. The service provider provides a list of identity providers, and at step 520, an identity provider is selected where a master account has previously been generated (and which the user desires to associate with service provider account that is to be subsequently generated). Once the identity provider has been selected, at step 530, the service provider sends a list of data required to establish a new service provider account to the selected identity provider. The user is then, at step 540, redirected to login to the master account (to ensure that the user has permission to access the master account). Next, the identity provider, at step 550, acquires the data needed to establish the service provider account from a web service provider (although it will be appreciated by the skilled artisan that the information necessary to generate some service provider accounts will already be resident at the identity provider so that accessing a web service provider is not required), which is later sent, at step 560 to the service provider so that the new service provider account may be generated. The master account and the newly established service provider account are then federated and the user is redirected to the service provider.

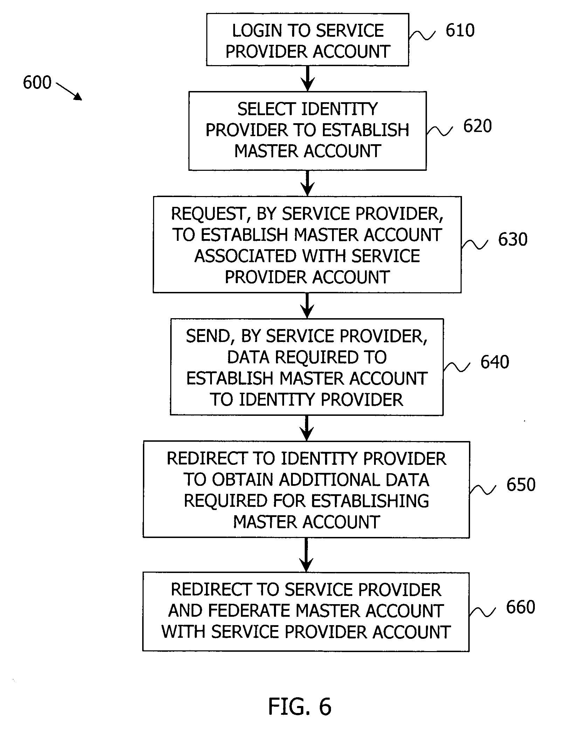

Fig. 6 illustrates another embodiment 600 useful for understanding and implementing the invention. With this example, the user has a pre-existing account with a service provider and the example begins with the user log in into the service provider account, at step 610, at the service provider where the service provider account was established. The user then, at step 620, selects an identity provider where he or she wishes to establish an account. Once the identity provider has been selected, at step 630, the service provider requests that the identity provider establish a new master account to associate with the service provider account. The service provider, at step 640, sends the data required to establish the master account to the identity provider. Optionally, at step 650, the user may be redirected to the identity provider to provide additional data required for establishing the master account (although the person of skill in the art will recognize that this step may be skipped if the service provider, in connection with the service provider account, has data pertaining to the user that is sufficient to establish the master account). Once the master account has been established, at step 660, the user is redirected to the service provider account and the master account and the service provider account are thereinafter federated (or otherwise associated).

It will be appreciated that there are many variations that may be implemented in connection with the embodiments described above. For example, the account creation may occur in the form of a prompt seeking a user to enter in additional information (rather than accessing the data from a component such as a web service provider or from using previously generated data associated with a pre-existing account). Furthermore, information about account creation and/or account linking may be sent from at least one of the identity provider and the service provider at which a new account has been generated to a user terminal from which account creation was requested.

The skilled artisan will appreciate the benefits of the current invention which include enhanced techniques for associating accounts with both pre-existing accounts and newly generated accounts. In particular, the invention provides a user-friendly and easy to implement arrangement that will further the adoption of master accounts that can be used to access a plurality of service provider accounts. As will be appreciated, the invention synergistically combines the creation of a new account at a service provider with the association of the newly created account and a master account of an identity provider. This synergism permits to reduce the amount of user interaction and thus increases the degree of automation.

While the present invention has been described with respect to particular embodiments (including certain system arrangements and certain orders of steps within various methods), those skilled in the art will recognize that the present invention is not limited to the specific embodiments described and illustrated herein. Therefore, while the present invention has been described in relation to its preferred embodiments, it is to be understood that this disclosure is only illustrative. Accordingly, it is intended that the invention be limited only by the scope of the claims appended hereto.

## Claims

1. A method for linking an account at a service provider (130) with a master account previously generated by an identity provider (120), the method comprising the steps of:
receiving, by the identity provider (120), a request for access;
determining, by the identity provider (120), which data is required to generate a new account by the service provider (130);
acquiring, by the identity provider (120), data required to generate the new account;
sending, by the identity provider (120) to the service provider (130), data required to generate the new account; and
associating, by the identity provider (120), the master account with the new account generated by the service provider (130).

2. The method of claim 1, further comprising the initial steps of:
receiving, by the service provider (130), a request to access the service provider (130);
enabling, by the service provider (130), a selection of the identity provider (120); and
sending, by the service provider (130), the request to access the identity provider (120).

3. The method of any of the preceding claims, further comprising the step of enabling, by the identity provider (120), the selection of the service provider (130) to generate a new account.

4. The method of any of the preceding claims, further comprising the step of receiving, by the identity provider (120), account information required to associate the master account with the new account.

5. The method of any of the preceding claims, further comprising the step of polling, by the identity provider (120), the service provider (130) or another network component (140) to determine what data is required to generate the new account.

6. The method of any of the preceding claims, further comprising the step of receiving, by the identity provider (120), from the service provider (130) or another network component, a list of required data needed to generate the new account.

7. The method of any of the preceding claims, further comprising the step of generating, by the service provider (120), the new account.

8. The method of claim 7, further comprising the step of accessing, via the identity provider (130), the new account at the service provider (120) after the generation of the new account.

9. The method of any of the preceding claims, wherein data required to generate the new account is stored at a data provider (150) accessible via a communications network.

10. The method of any of the preceding claims, further comprising the steps of:
polling, by the identity provider (120) a discovery service (140), where data required to generate the new account may be accessed; and
receiving, by the identity provider (120) from the discovery service (140), the location of where data required to generate the new account may be accessed.

11. The method of any of the preceding claims, wherein the service provider (130) is within a circle of trust with the identity provider (120).

12. The method of any of the preceding claims, further comprising the step of obtaining, by the identity provider (120), at least a part of the data required to generate the new account via an input interface (110).

13. The method of any of the preceding claims, further comprising the step of populating a database (860) accessible by the identity provider (120) with data associated with the new account generated by the service provider (130).

14. A computer program product comprising program code portions for performing the steps of any of the preceding claims when the computer program product is run on a computer system.

15. The computer program product of claim 14, wherein the computer program product is stored on a computer readable recording medium.

16. A network component comprising a computer processor and a memory coupled to the processor, where the memory is encoded with one or more programs that may perform the steps of any of claims 1 to 14.

17. A network component (810) for linking an account at a service provider component (820) with a master account previously generated by the network component (810), the network component comprising:
a first interface (840) for receiving a request for access;
a first processor (880) for determining which data is required to generate a new account by the service provider component (820);
a first database (860) for storing data associated with the master account and data associated with the new account at the service provider component (820);
wherein the first interface (840) acquires data required to generate the new account and sends data required to generate the new account to the service provider component (820); and
wherein the first processor (880) associates the master account with the new account generated by the service provider component (820).

18. A system comprising the network component of claim 17 and a service provider component (820), the service provider component comprising:
a second interface (850) for receiving a request to access the service provider component (820);
a second database (870) for storing data associated with the new account and the network component (810); and
wherein the second interface (850) enables the selection of the network component (810) and sends a request to access the network component.
